(19) **Europäisches Patentamt**

**European Patent Office**

**Office européen des brevets**

(11) **EP 1 414 164 A1**

(12) **EUROPEAN PATENT APPLICATION**

(43) Date of publication:
   **28.04.2004  Bulletin 2004/18**

(51) Int Cl.$^7$: **H04B 3/32**

(21) Application number: **02292659.6**

(22) Date of filing: **25.10.2002**

(84) Designated Contracting States:
   **AT BE BG CH CY CZ DE DK EE ES FI FR GB GR
   IE IT LI LU MC NL PT SE SK TR**
   Designated Extension States:
   **AL LT LV MK RO SI**

(71) Applicant: **ALCATEL
   75008 Paris (FR)**

(72) Inventors:
   • **Cendrillon, Raphael Jean
     3001 Heverlee (BE)**
   • **Moonen, Marc Suzanne Paul
     3020 Herent (BE)**

• **Van Acker, Katleen Peggie Florimond
  2840 Rumst (BE)**
• **Vandaele, Piet
  8650 Merksem (BE)**
• **Bostoen, Tom
  8200 Brugge St. Andries (BE)**

(74) Representative:
   **Narmon, Gisèle Marie Thérèse et al
   Alcatel Bell N.V.,
   Francis Wellesplein 1
   2018 Antwerpen (BE)**

(54) **Method for cross-talk cancellation**

(57)   A method to provide cross-talk cancellation in a multiple input multiple output system that comprises a plurality of outputs is described. The method comprises a step determining during a first phase and according to a heuristic model, for a first signal to be transmitted to a first output of the plurality of outputs at least one dominant interfering tone of at least one second signal to be transmitted to a second output of the plurality of outputs. The at least one dominant interfering tone is in fact a tone of at least one second signal that would generate cross-talk upon the first signal when it would be transmitted to the first output. The method further comprises a step of executing a step of partial cross-talk cancellation for the first signal during a second phase for the one or more determined dominant interfering tones associated to one or another second signal.

Figure 1

**Description**

The present invention relates to a method to provide cross-talk cancellation as described in the preamble of claim 1 and to a module as described in the preamble of claim 7 to execute such a method.

Such a method and module are already known in the art. Indeed, telecommunication systems such as access systems might comprise a Multiple Input Multiple Output MIMO system. Such a system comprises a plurality of downstream transceivers, each being coupled, respectively, to a plurality of upstream transceivers. It has to be explained here that each downstream transceiver is enabled to receive a signal in the downstream direction from a respective upstream transceiver and also to transmit on its turn a signal in the upstream direction to this upstream transceiver.

However such a transceiver, either a downstream transceiver or an upstream transceiver, that receives a signal from its associated transceiver will also receive cross-talk interference from the other transceivers which are interchanging signals as well.

Therefore, instead of demodulating the signals on each line e.g. each twisted pair separately, a Multiple Input Multiple Output system relies on a joint processing of all signals which leads to increased performance. In order to realize this joint processing, it has to be understood that each plurality of transceivers has to be coupled among each other.

Multiple access systems such as e.g. Very high bit-rate Digital Subscriber Line systems VDSL are operating in high frequency ranges whereby considerable cross-talk is introduced into the received signals. When an operator has access to the multiple transceivers at one side e.g. at the central office side, cross-talk cancellation or cross-talk pre-compensation can be applied via joint processing in order to reduce cross-talk.

It has to be explained that full cross-talk cancellation cancels all interfering signals, i.e. the signals transmitted by all other transceivers. According to prior art methods, this is done for every tone of the signals coming from every transceiver at the other side. Full cross-talk cancellation results in a high computational complexity and large memory requirements. Therefore according to a known prior art method only a subset of the interfering signals are cancelled. This is called partial cross-talk cancellation whereby cross-talk cancellation is enabled at lower complexity. Indeed, by only canceling dominant interferers, most of the benefits of cross-talk cancellation are gained whilst significantly reducing the computational complexity and large memory requirements.

Such a subset of dominant interferers is usually determined under the assumption that the most dominant interferers are physically located near each other in the same binder. Indeed, twisted pairs that are located near each other in a same binder will easily introduce cross-talk interference to each other. Indeed, this introduces considerably more cross-talk than the twisted pairs which are located at the opposite side in this binder.

However, cross-talk elimination for all tones of such a selected subset of interferers still requires too many computing resources.

The object of the present invention is to provide a method and module to provide partial cross-talk cancellation such as the above known schemes but which improve the computational complexity during operational phase of the system.

According to the invention, this object is achieved with the method to provide cross-talk cancellation in a multiple input multiple output system according to claim 1 and with the module to provide cross-talk cancellation in a multiple input multiple output system according to claim 7 that executes such a method.

Indeed, by pre-selecting during a first phase e.g. during initialization phase of the access environment, for every user the most dominant interfering tones and users, a general scheme is provided for allocation of computing resources during operation time across the different users, tones and interfering users.

In this way, the method according to the present invention comprises a first step being executed by the determining means of the module according to the present invention, of determining during a first phase and according to a heuristic model, for a first signal that will be transmitted to a first output of a plurality of outputs of the multiple input multiple output system, at least one dominant interfering tone of at least one second signal that will be transmitted to a second output of the plurality of outputs. This dominant interfering tone is a tone of the second signal that would generate cross-talk upon the first signal when this first signal would be transmitted to the first output. Hereafter, during a second phase of the method a step of cross-talk cancellation is executed by the executing means for the first signal for at least one determined dominant interfering tone of the second signal.

This is described in the method of claim 1 and the module of claim 7.

A preferred implementation is described in claim 2. Herein, the method to provide cross-talk cancellation according to the present invention further comprises executing the step of determining during a first phase and according to a heuristic model at least one dominant interfering tone. This at least one dominant interfering tone is determined for each first signal. Furthermore, this at least one dominant interfering tone is determined out of all tones of all other second signals which are different of the first signal.

Hereby, the step of executing the cross-talk cancellation is done during the second phase for each first signal and for each determined dominant interfering tone coming out of the tones of one or another second signal.

In this way the method according to the invention describes a method to select during a first phase e.g. initialization time of the access environment the dominant interfering tones out of all tones of all second signals upon each first signal. Hence the method specifies the interfering signals with its tones. The corresponding tones of the corresponding signals are then to be cancelled on the given first signals during operational time i.e. the second phase. This means a partial cross-talk cancellation is executed for only well considered dominant interfering tones whereby a total amount of computing power, which is spent during data transmission i.e. the second phase, is treated as a resource that is allocated across all user-signals and tones.

It has to be explained that the dominant interfering tones are selected out of all tones on all second signals. This means that for a second signal there can be selected zero, one or more dominant interfering tones during this step of determining dominant interfering tones.

This means also that during the step of executing the partial cross-talk cancellation for a second signal either zero tones are cancelled since no dominant interfering tone was selected or either one or more tones are cancelled since one or more dominant interfering tones were determined during the first phase.

A preferred implementation of the heuristic model is described in claim 3. Herein the method to provide cross-talk cancellation according to the present invention further comprises that the step of determining according to this heuristic model the different dominant interfering tones comprises the steps of:

- determining a utility value for each predetermined tone of the second signal. This utility value reflects a utility of canceling the predetermined tone and is defined in function of an increase in transmission rate it would cause to the first signal in the event when all other interfering signals on that predetermined tone would have been cancelled; and
- in the event when this utility value exceeds a predefined utility threshold, the predetermined tone is defined as a dominant interfering tone. Hereafter the step of cross-talk cancellation for the first signal during the second phase for each defined dominant interfering tone of one or another second signal can be executed according to a computing resource efficient way.

In this way, the usefulness or utility of canceling a given interfering signal on a given tone is defined as the increase in rate it would cause to the signal if all other interfering second signals on that tone had already been cancelled. A 'utility measure' as a function of signal, interfering signal and tone is provided. The results for a first signal of a first user are sorted in descending order whereby upon definition of a threshold a set of dominant interfering tones for a first user are defined. This set of dominant interfering tones comprises tones of different second signals but not necessarily a tone for each second signal.

Two possible implementations are provided to implement the execution of the step of cross-talk cancellation during the second phase. A first way is described in claim 4. Herein the cancellation step during the second phase is only executed after reception of the first signal at the first output in order to compensate the cross-talk that was imposed on the first signal during the transmission of the first signal to this first output.

A second possible implementation is described in claim 5. Herein the step of cross-talk cancellation during the second phase is in fact executed before transmission of the first signal in order to pre-compensate the cross-talk that will be imposed on this first signal during the coming transmission of the first signal to the first output. This step of cross-talk cancellation is in fact a step of cross-talk pre-compensation since it is executed during the second phase i.e. operational time but before the cross-talk takes place.

A further remark is that in a preferred embodiment the first phase is in fact a time period during initialization time of the multiple input multiple output system. In this way, the preprocessing of determining the most dominant interfering signals and tones is already executed before the system becomes operational. Hereby, computational resources are saved during operational time periods whereby during the operational time periods only the cancellation, alias the real cancellation or the pre-compensation, has to be executed for these dominant interfering signals and tones. So, during operational phase, only partial cross-talk cancellation is executed for only dominant interfering signals and tones which are precisely determined during initialization phase of the system by means of a heuristic model.

It has to be remarked here that a determination of the most dominant interfering signals and tones might be either executed for the first time or might be repeated during operational phase as well. Such an implementation would however turn out to use computational resources at the moment when they should be used scarcely.

A further remark is that the method according to the present invention can be used as well in the downstream direction of signal transmission as in the upstream direction of signal transmission. Only care has to be taken that the module for providing cross-talk cancellation in a multiple input multiple output system comprises means that ensures access to the different received or transmitted signals in order to execute the joint processing of the received or transmitted signals i.e. in order to execute the cross-talk cancellation or the cross-talk pre-compensation.

Such a possible implementation is described in claim 8. Herein the multiple input multiple output system comprises a central office that comprises a module according to the present invention. When a multiple input multiple output system comprises a central office, the central office has access to all received signals. In this way, the central office is enabled to execute a real cross-talk cancellation on a received first signal from e.g. a customer equipment of the dominant interfering tones being determined according to the heuristic model during the first phase. Furthermore, this central office is also enabled to execute a cross-talk cancellation being a cross-talk pre-compensation on first signal to be transmitted to e.g. a customer equipment of the dominant interfering tones being determined according to the heuristic model during the first phase.

Finally it is described in claim 9 that the module is comprised in the multiple input multiple output system which is comprised in a Digital Subscriber Line system.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

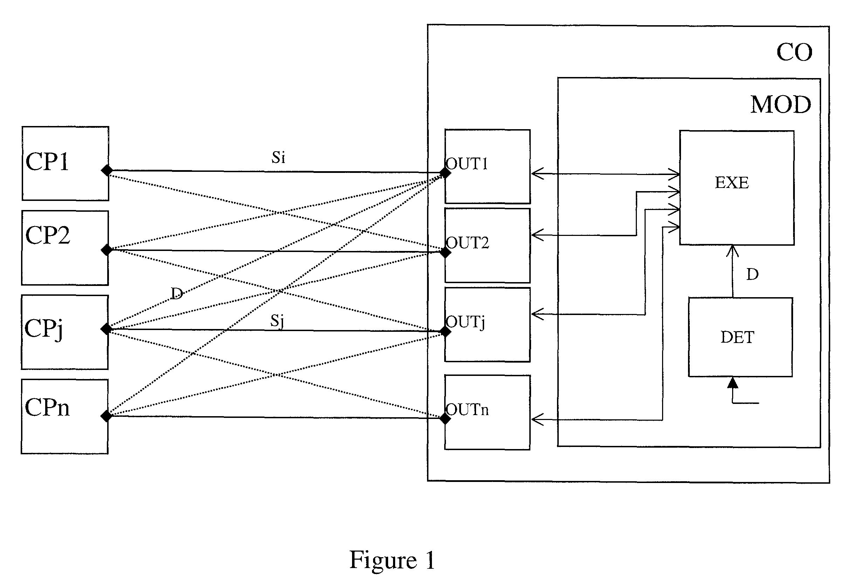

The above and other objects and features of the invention will become more apparent and the invention itself will be best understood by referring to the following description of an embodiment taken in conjunction with the accompanying drawing wherein figure 1 represents a multiple input multiple output system in an access system.

The working of the device according to the present invention in accordance with its telecommunication environment that is shown in figure 1 will be explained by means of a functional description of the different blocks shown therein. Based on this description, the practical implementation of the blocks will be obvious to a person skilled in the art and will therefor not be described in details.

Referring to figure 1, an access system is shown. The access system comprises a Multiple Input Multiple Output system which on its turn is comprised in the access system. The access system comprises a number n of customer premises equipment CP1, CP2, ..., CPm, ... CPn at the downstream side and a central office at the upstream side. Each customer premises equipment comprises a transmitter/receiver (not shown) and is respectively coupled via a link to a transmitter/receiver in the central office CO.

In this way, each input/output of a customer equipment with its link and its associated input/output of the transmitter/receiver in the central office are constituting together the multiple input multiple output system.

In the event of considering a downstream signals from the central office to the customer equipments the multiple input multiple output system comprises at the central office inputs and at the customer premises equipment outputs.

In the event of considering upstream signals from the customer premises equipment to the central office the multiple input multiple output system comprises at the central office outputs and at the customer premises equipments inputs.

In order not to overload the figure unnecessarily, a situation of upstream signals is considered whereby only the outputs OUT1, OUT2, ..., OUTm, ..., OUTn at the central office side are shown.

It has to be understood that the principle idea of the present invention is not limited to situations of upstream signals. Indeed, small modifications to the description below can be provided in order to describe a situation with downstream signals.

The central office CO comprises besides the outputs OUT1, OUT2, ..., OUTm, ..., OUTn at the different transmitter/receivers a module MOD to provide cross-talk cancellation according to the present invention. The module MOD comprises a determiner DET and an executor EXE. The determiner DET is coupled to the executor EXE that is coupled on its turn to each transmitter/receiver of the central office CO.

The determiner DET according to the present invention is included to determine during a first phase dominant interfering tones. The first phase is according to this preferred embodiment executed during initialization phase of the access system. The dominant interfering tones are determined for each signal, called first signal e.g. Si that will be transmitted to an output, called first output e.g. OUTi of the plurality of outputs OUT1, OUT2, ..., OUTn. A dominant interfering tone e.g. D is a tone of a signal, called second signal e.g. $S_j$ that would be transmitted to an output, called second output $OUT_j$ of the plurality of outputs OUT1, OUT2, ..., OUTn whereby the dominant interfering tone D is a tone of the second signal Sj that would generate cross-talk on the first signal Si when it is transmitted to this first output OUTi. The determination of the dominant interfering tone which is in fact a selection out of the different tones of the second signal Sj is determined according to a heuristic model.

The working of the heuristic model is explained in the following paragraph. Firstly a utility value is determined for each examined tone of the second signal Sj. This utility value reflects in fact a utility of canceling the second signal on this examined tone and is defined in function of an increase in transmission rate that canceling the second signal on this tone would cause to the first signal Si in the event when all other interfering signals on that tone would have been cancelled. In the event when the utility value for this examined tone exceeds a utility threshold, the examined tone is indeed determined and selected as a dominant interfering tone D for the second signal.

This will now be explained in more detail. The division of available computing resources between users can also be adjusted to give more priority to users who suffer the most from cross-talk. When using a linear Minimum Mean Squared Error MMSE cross-talk canceller, canceling one interferer from a single user's signal, at one tone corresponds to a complex multiplication. In the event of partial cross-talk cancellation, the cross-talk canceling filter W(k) is a sparse matrix. The number of non-zero elements in W(k) corresponds to the number of multiplications per received DMT-block for tone k.

When the total number of available multiplications (per received DMT-block) is set to cKn where K is the number of tones, n the number of users in a common binder and c a freely chosen parameter. This definition is used to limit the complexity of cross-talk cancellation to c times that of a standard single-user frequency domain equalizer FDE.

To allow the division of computing resources between users to be tuned, a parameter $\mu_i$ is defined which determines the proportion of total multiplications allocated to user i.

The number of multiplications for user i is:

$$\text{mults}_i = \mu_i cKn \ \Sigma_i \mu_i = 1$$

The multiplications are in this way divided between users. Given that there is a fixed number of multiplications available for a certain user, these multiplications must be allocated across tones and interferers.

The optimal solution to the computing resource allocation problem is highly complex and this arises from the high dimensional, combinational nature of the problem. In considering the allocation of resources across tones and interferers a heuristic model is hereby provided.

The usefulness or utility of cancelling a given interferer on a given tone, is defined as the increase in rate it would cause to the user, if all other interferers had already been cancelled. A utility measure as a function of a user is hereby defined:

$$\partial R_{k,j}{}^i = \log(1 + \frac{signal_i(k)}{noise_i(k)}) - \log(1 + \frac{signal_i(k)}{Interference_{i,j}(k) + noise_i(k)})$$

$$= \log(\frac{(signal_i(k) + noise_i(k))(Interference_{i,j}(k) + noise_i(k))}{noise_i(k)(signal_i(k) + Interference_{i,j}(k) + noise_i(k))})$$

where i is the user of interest, j the interferer, and k the tone.

It has to be remarked that the cross-talk parameters $h_{ij}(k)$ are already determined in a previous step of the model. This is shown in Figure 1 by means of an input-arrow to the determiner DET. However this goes beyond the aim of the present invention and is therefor not described here in more details.

Furthermore, the following is defined:

$$signal_i(k) = |h_{ii}(k)|^2 \ S_i(k)$$

$$Interference_{i,j}(k) = \Gamma |h_{ij}(k)|^2 \ S_j(k)$$

$$noise_i(k) = \Gamma \sigma_{n_i}^2(k)$$

Here $\Gamma$ represents the SNR gap to capacity and is a function of the target BER, desired noise margin and coding gain.

Using this definition $\exp(\partial R_{k,j}^i)$ as the metric for dominant (tone, interferer) pair selection is defined:

$$\Delta_{k,j}^{i} = \exp(\partial R_{k,j}^{i}) = \begin{cases} \dfrac{(signal_i(k) + noise_i(k))(\mathrm{int}\, erference_{i,j}(k) + noise_i(k))}{noise_i(k)(signal_i(k) + \mathrm{int}\, erference_{i,j}(k) + noise_i(k))} \rightarrow i \neq j \\ \infty \rightarrow i = j \end{cases}$$

$\Delta_{jk}^{i}$ is defined as infinity when i=j to force the direct lines to always be equalized.

Hereby, user i's direct line is always included during detection of user i.

A vector that contains the metrics for user is sorted in descending order is defined:

$$t^{i} = \text{sort} ([\Delta_{1,1}^{i} \,_{\dots}\, \Delta_{1,n}^{i} \,_{\dots}\, \Delta_{K,1}^{i} \,_{\dots}\, \Delta_{K,n}^{i}])$$

This is used as the threshold in the choice of dominant interferers whereby the set of dominant interferers for user i is defined as

$$D^{i} = \left\{ (k, j) : \Delta_{j,k}^{i} \geq t^{i}(\mu_i cKn) \right\}$$

where $t^i(a)$ denotes the a'th element of vector $t^i$.

Notice that $|D^i| = \mu_i cKn$ where $|.|$ denotes cardinality.

The set of dominant interferers for user i at a single tone k is defined as :

$$D_k^{i} = \left\{ j : (k, j) \in D^{i} \right\}$$

In this way a set of dominant interferers i.e. $D_k^i$, or also called in the claims "at least one dominant interfering tone D", is determined for a first signal on a per tone and second signal base. The most interfering tones among the different second signals Sj are determined according to this heuristic model.

This set of dominant interfering tones D is provided by the determiner DET to the executor EXE. The executor EXE executes the cross-talk cancellation for the first signal Si during a second phase. This second phase is executed during operational time of the access system. The cross-talk cancellation is executed according to the determined set of dominant interfering tones D of a second signal.

In this way, the central office is enabled due to the presence of the module MOD to provide cross-talk cancellation according to the present invention to execute a cross-talk cancellation on the first signal Si upon reception of the signal from the customer premises equipment CPi. Even more, this cross-talk cancellation is a partial cross-talk cancellation that requires a minimum of computation resources due to the use of the heuristic model.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

1. A method to provide cross-talk cancellation in a multiple input multiple output system comprising a plurality of outputs (OUT1, OUT2, ..., OUTn), said method comprises a step of executing for a first signal (Si) a cross-talk cancellation, **characterized in that** said method further comprises

   - determining during a first phase and according to a heuristic model, for said first signal (Si) to be transmitted to a first output (OUTi) of said plurality of outputs (OUT1, OUT2, ..., OUTn), at least one dominant interfering tone (D) of at least one second signal (Sj) to be transmitted to a second output (OUTj) of said plurality of outputs (OUT1, OUT2, ..., OUTn), said at least one dominant interfering tone (D) being a tone of said at least one second signal (Sj) that would generate cross-talk upon said first signal (Si) when being transmitted to said first output (OUTi); and

- executing said step of cross-talk cancellation for said first signal (Si) during a second phase for said at least one determined dominant interfering tone (D) of said second signal (Sj).

**2.** The method to provide cross-talk cancellation according to claim 1, **characterized by** executing said step of determining during a first phase and according to a heuristic model said at least one dominant interfering tone (D), for each first signal (Si;i=1...n), and out of all tones of all other second signals (Sj; j=1...n; j≠i) being different of said first signal (Si); and executing said step of cross-talk cancellation for each said first signal (Si;i=1...n) during said second phase for each determined dominant interfering tone (D) of one of said all other second signals (Sj; j=1...n; j≠i).

**3.** The method to provide cross-talk cancellation according to anyone of claim 1 and claim 2, **characterized in that** said step of determining during a first phase and according to a heuristic model said at least one dominant interfering tone (D) comprises:

- determining a utility value for each predetermined tone of said second signal (Sj), said utility value reflecting a utility of canceling said predetermined tone and being defined in function of an increase in transmission rate it would cause to said first signal (Si) in the event when all other interfering signals (Sl; l≠j and l≠i) on that predetermined tone would have been cancelled; and
- in the event when said utility value exceeds a utility threshold, defining said predetermined tone as a dominant interfering tone (D).

**4.** The method to provide cross-talk cancellation according to anyone of claim 1 to claim 3, **characterized in** by executing said step of cross-talk cancellation during said second phase upon reception of said first signal (Si) in order to compensate cross-talk being imposed upon said first signal (Si) during transmission of said first signal (Si).

**5.** The method to provide cross-talk cancellation according to claim 1 to claim 3, **characterized in** by executing said step of cross-talk cancellation during said second phase, before transmission of said first signal (Si) in order to pre-compensate cross-talk that will be imposed upon said first signal (Si) during transmission of said first signal (Si).

**6.** The method according to anyone of claim 1 to claim 5, **characterized in** by executing said first phase during initialization of said multiple input multiple output system.

**7.** A module (MOD) to provide cross-talk cancellation in a multiple input multiple output system that comprises a plurality of outputs (OUT1, OUT2, ..., OUTn), said module comprises an executing means (EXE) coupled to each one of said plurality of outputs (OUT1, OUT2, ..., OUTn) to execute for a first signal (Si) a cross-talk cancellation, **characterized in that** said module further comprises

- determining means (DET) to determine during a first phase and according to a heuristic model, for said first signal (Si) to be transmitted to a first output (OUTi) of said plurality of outputs (OUT1, OUT2, ..., OUTn), at least one dominant interfering tone (D) of at least one second signal (Sj) to be transmitted to a second output (OUTj) of said plurality of outputs (OUT1, OUT2, ..., OUTn), said at least one dominant interfering tone (D) being a tone of said at least one second signal (Sj) that would generate cross-talk upon said first signal (Si) when being transmitted to said first output (OUTi); and that said executing means is coupled to said determining means (DET) in order to execute said cross-talk cancellation for said first signal (Si) during a second phase according to said at least one determined dominant interfering tone (D) of said second signal (Sj).

**8.** The module according to claim 7, **characterized in that** said multiple input multiple output system comprises a central office and that said module is comprised in said central office.

**9.** The module according to claim 7, **characterized in that** said module is comprised in said multiple input multiple output system which is comprised in a Digital Subscriber Line system.

Figure 1

## EUROPEAN SEARCH REPORT

**European Patent Office**

Application Number

EP 02 29 2659

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 887 032 A (CIOFFI JOHN M) 23 March 1999 (1999-03-23) * column 3, line 35 - column 4, line 12 * * column 4, line 63 - line 64 * * column 7, line 31 - line 65 * * column 11, line 26 - column 12, line 12 * --- | 1-9 | H04B3/32 |
| A | EP 1 109 329 A (ST MICROELECTRONICS SA ;STMICROELECTRONICS N V (NL)) 20 June 2001 (2001-06-20) * paragraphs [0021]-[0024] * ----- | 1-9 | |
| | | | TECHNICAL FIELDS SEARCHED (Int.Cl.7) |
| | | | H04B |

The present search report has been drawn up for all claims

| Place of search | Date of completion of the search | Examiner |
|---|---|---|
| THE HAGUE | 12 March 2003 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 29 2659

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2003

| Patent document cited in search report | | Publication date | Patent family member(s) | | Publication date |
|---|---|---|---|---|---|
| US 5887032 | A | 23-03-1999 | AU<br>EP<br>WO | 4170797 A<br>1048129 A1<br>9810528 A1 | 26-03-1998<br>02-11-2000<br>12-03-1998 |
| EP 1109329 | A | 20-06-2001 | EP<br>JP<br>US | 1109329 A1<br>2001244855 A<br>2001006510 A1 | 20-06-2001<br>07-09-2001<br>05-07-2001 |

For more details about this annex : see Official Journal of the European Patent Office, No. 12/82